# EUROPEAN PATENT APPLICATION

(11) **EP 2 045 651 A2**
(43) Date of publication of application: **08.04.2009**
(21) Application number: 08016804.0
(22) Date of filing: 24.09.2008
(51) Int. Cl.: G02F 1/1335, G02F 1/13363

(54) **Liquid crystal panel and liquid crystal display device**

(30) Priority: 05.10.2007 JP 2007262278
(71) Applicant: Nitto Denko Corporation, Ibaraki-shi, Osaka 567-8680 (JP)
(72) Inventor: Maezawa, Shohei, Ibaraki-shi Osaka 567-8680 (JP); Ishibashi, Kuniaki, Ibaraki-shi Osaka 567-8680 (JP); Nakata, Mie, Ibaraki-shi Osaka 567-8680 (JP); Takemoto, Hiroyuki, Ibaraki-shi Osaka 567-8680 (JP); Katami, Hirofumi, Ibaraki-shi Osaka 567-8680 (JP)
(74) Representative: Grünecker, Kinkeldey, Stockmair & Schwanhäusser Anwaltssozietät

(57) **Abstract**

A liquid crystal panel 100 of the present invention comprises a liquid crystal cell 30, a first polarizing plate 10 disposed on a visible side of the liquid crystal cell and including a first polarizer 11, and, a second polarizing plate 20 disposed on a side opposite to the visible side of the liquid crystal cell and including a second polarizer 22. one polarizing plate of the first polarizing plate and the second polarizing plate is provided with a first retardation layer 12 which is disposed between the liquid crystal cell and one polarizer of the first polarizer and the second polarizer, and whose refractive index ellipsoid satisfies a relationship of nz > nx = ny, and, a transmittance of the second polarizing plate is larger than a transmittance of the first polarizing plate.

## Description

### BACKGROUND OF THE INVENTION

### Field of the Invention

The present invention relates to a liquid crystal panel and a liquid crystal display device that show a high contrast ratio in a front direction and in an oblique direction.

### Description of the Related Art

A liquid crystal display device is a device that displays characters and images by utilizing electro-optical properties of liquid crystal molecules, and is widely prevalent in portable phones, notebook computers, personal computer monitors, liquid crystal television sets, and others. Generally, in a liquid crystal display device, a liquid crystal panel is used in which polarizing plates are disposed on both sides of a liquid crystal cell. For example, in a liquid crystal panel of the normally black type, black images can be displayed at the time of no voltage application (See, for example, Japanese Patent Application Laid-Open (JP-A) No. 09-269504).

In recent years, a liquid crystal display device is subjected to high resolution process, and is provided for a variety of uses. In accordance therewith, a liquid crystal panel and a liquid crystal display device are demanded showing a high contrast ratio so as to be capable of displaying characters and images in a more vivid manner.

### SUMMARY OF THE INVENTION

An object of the present invention is to provide a liquid crystal panel and a liquid crystal display device that show a high contrast ratio in a front direction and in an oblique direction.

In order to solve the above-mentioned problems, the present inventors have made eager studies and, as a result, have newly found out that a liquid crystal panel and a liquid crystal display device can be obtained showing a higher contrast ratio in a front direction and in an oblique direction than a liquid crystal panel and a liquid crystal display device of the prior art, by setting the transmittance of one polarizing plate disposed on a side opposite to the visible side to be larger than the transmittance of the other polarizing plate among the polarizing plates disposed on both sides of the liquid crystal cell and by disposing a retardation layer between the liquid crystal cell and one of the polarizers constituting the polarizing plates, where the retardation layer has a refractive index ellipsoid satisfying a relationship of nz > nx = ny, thus completing the present invention.

That is, the present invention provides a liquid crystal panel comprising a liquid crystal cell, a first polarizing plate disposed on a visible side of the liquid crystal cell and including a first polarizer, and, a second polarizing plate disposed on a side opposite to the visible side of the liquid crystal cell and including a second polarizer, wherein one polarizing plate of the first polarizing plate and the second polarizing plate is provided with a first retardation layer which is disposed between the liquid crystal cell and one polarizer of the first polarizer and the second polarizer, and whose refractive index ellipsoid satisfies a relationship of nz > nx = ny, and a transmittance of the second polarizing plate is larger than a transmittance of the first polarizing plate. In the case where the first polarizing plate is provided with the first retardation layer, the first retardation layer is disposed between the liquid crystal cell and the first polarizer. In the case where the second polarizing plate is provided with the first retardation layer, the first retardation layer is disposed between the liquid crystal cell and the second polarizer.

Preferably, a difference between the transmittance of the second polarizing plate and the transmittance of the first polarizing plate is from 0.1 to 6.0%.

Preferably, the liquid crystal cell is a liquid crystal cell that is homogeneously oriented in a state in which no electric field is present.

Preferably, the transmittance of the first polarizing plate is 38.3 to 43.3%.

Preferably, the transmittance of the second polarizing plate is 41.1 to 44.3%.

Preferably, a polarization degree of the first polarizing plate and/or the second polarizing plate is 99% or more.

Preferably, the first polarizer and the second polarizer contain, as a major component, a polyvinyl alcohol series resin containing iodine.

Preferably, a difference between an iodine content of the first polarizer and an iodine content of the second polarizer is from 0.1 to 2.6 wt%.

Preferably, an iodine content of the first polarizer and the second polarizer is from 1.8 to 5.0 wt%.

Preferably, a retardation value Rth[590] in a thickness direction of the first retardation layer is from -150 to -40 nm.

Preferably, the other one polarizing plate of the first polarizing plate and the second polarizing plate is provided with a second retardation layer which is disposed between the liquid crystal cell and the other one polarizer of the first polarizer and the second polarizer, and whose refractive index ellipsoid satisfies a relationship of nx = nz > ny. In the case where the first polarizing plate is provided with the first retardation layer, the second retardation layer is disposed between the liquid crystal cell and the second polarizer included in the second polarizing plate. In the case where the second polarizing plate is provided with the first retardation layer, the second retardation layer is disposed between the liquid crystal cell and the first polarizer included in the first polarizing plate.

Preferably, a slow axis direction of the second retardation layer and an absorption axis direction of the polarizer included in the one polarizing plate of the first polarizing plate and the second polarizing plate that is provided with the first retardation layer are substantially perpendicular to each other.

Preferably, an in-plane retardation value Re [590] of the second retardation layer is from 200 to 300 nm.

Preferably, the second retardation layer contains a styrene-maleic anhydride copolymer.

The present invention provides a liquid crystal display device provided with the above liquid crystal panel.

In a liquid crystal panel and a liquid crystal display device according to the present invention, the transmittance of the second polarizing plate disposed on a side opposite to the visible side is set to be larger than the transmittance of the first polarizing plate among the first and second polarizing plates disposed on both sides of the liquid crystal cell, and a retardation layer is disposed between the liquid crystal cell and one of the first and second polarizers constituting the polarizing plates, where the retardation layer has a refractive index ellipsoid satisfying a relationship of nz > nx = ny. For this reason, the liquid crystal panel and the liquid crystal display device of the present invention show a higher contrast ratio in a front direction and in an oblique direction than the liquid crystal panel and the liquid crystal display device of the prior art. Therefore, the liquid crystal panel and the liquid crystal display device of the present invention are extremely useful for improvement of the display characteristics when applied to personal computer monitors, liquid crystal television sets, and others.

### BRIEF DESCRIPTION OF THE DRAWINGS

Fig. 1 is a longitudinal cross-sectional view schematically showing a construction of a liquid crystal panel according to one embodiment of the present invention.
Fig. 2 is a longitudinal cross-sectional view schematically showing a construction of a liquid crystal display device according to one embodiment of the present invention.
Fig. 3 is a table showing characteristics of a polarizing plate fabricated in the Reference Example of the present invention.
Fig. 4 is a table showing characteristics of a liquid crystal display device fabricated in the Example and the Comparative Example of the present invention.

### DETAILED DESCRIPTION OF THE PREFERRED EMBODIMENTS

### <A. meaning of the terms>

The meaning of the terms used in the present invention are as follows.

### (1) transmittance

The transmittance means a Y-value of the XYZ-display system subjected to luminous compensation on the basis of the spectrum data measured under the condition of a C light source and a two-degree field in accordance with JIS Z 8701-1982.

### (2) refractive indices (nx, ny, nz)

The term "nx" refers to the refractive index of the direction in which the in-plane refractive index of the retardation layer (or film) attains the maximum (namely, the slow axis direction), and the term "ny" refers to the refractive index of the direction (namely, the fast axis direction) perpendicular to the slow axis in the plane of the retardation layer (or film). The term "nz" refers to the refractive index in the thickness direction of the retardation layer (or film).

### (3) in-plane retardation value

The "in-plane retardation value (Re[λ])" refers to the in-plane retardation value of a retardation layer (or film) as measured with light having a wavelength of λ (nm) at 23°C. The value Re[λ] can be determined by Re[λ] = (nx - ny) × d when the thickness of the retardation layer (or film) is assumed to be d (nm).

### (4) retardation value in the thickness direction

The "retardation value in the thickness direction (Rth[λ])" refers to the retardation value of a retardation layer (or film) in the thickness direction as measured with light having a wavelength of λ (nm) at 23°C. The value Rth[λ] can be determined by Rth[λ] = (nx - nz) x d when the thickness of the retardation layer (or film) is assumed to be d (nm).

### (5) Nz coefficient

The "Nz coefficient" is a value calculated from Rth[λ]/Re[λ] and, in the present invention, is a value calculated from Rth[590]/Re[590] when λ = 590 nm.

### (6) Photoelastic coefficient

The "photoelastic coefficient" means facility of generation of birefringence when a stress is generated in the inside by application of an external force to a retardation layer (or film). The photoelastic coefficient can be calculated, for example, from the gradient of the function of the retardation value and the stress by measuring the in-plane retardation value of a retardation layer (or film) with light having a wavelength of 590 nm while applying a stress at 23°C to a test piece of 2 cm x 10 cm using a spectroscopic ellipsometer, trade name "M-220" manufactured by JASCO Corporation.

### <B. summary of liquid crystal panel>

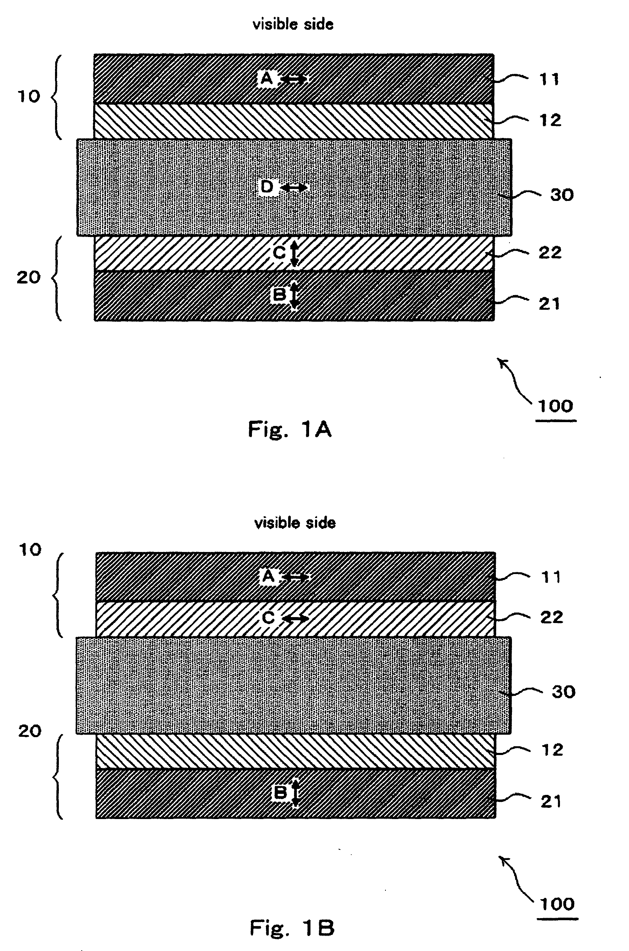

Fig. 1 is a longitudinal cross-sectional view schematically showing a construction of a liquid crystal panel according to one embodiment of the present invention. As shown in Fig.1, a liquid crystal panel 100 of the present invention comprises a liquid crystal cell 30, a first polarizing plate 10 disposed on a visible side of the liquid crystal cell 30 and including a first polarizer 11, and, a second polarizing plate 20 disposed on a side opposite to the visible side of the liquid crystal cell 30 and including a second polarizer 21. Then, a transmittance of the second polarizing plate 20 is larger than a transmittance of the first polarizing plate 10.

In the liquid crystal panel 100 of the present invention, one polarizing plate of the first polarizing plate 10 and the second polarizing plate 20 is provided with a first retardation layer 12 which is disposed between the liquid crystal cell 30 and one polarizer of the first polarizer 11 and the second polarizer 12, and whose refractive index ellipsoid satisfies a relationship of nz > nx = ny. In the example shown in Fig. 1A, the first polarizing plate 10 disposed on the visible side is provided with a first retardation layer 12 which is disposed between the liquid crystal cell 30 and the first polarizer 11 and whose refractive index ellipsoid satisfies a relationship of nz > nx = ny. However, the present invention is not limited to this alone, so that, as shown in Fig. 1B, it may be so constructed that the second polarizing plate 20 disposed on the side opposite to the visible side is provided with a first retardation layer 12 which is disposed between the liquid crystal cell 30 and the second polarizer 21 and whose refractive index ellipsoid satisfies a relationship of nz > nx = ny.

As described above, the liquid crystal panel 100 according to the present invention has a construction such that the second polarizing plate 20 having a larger transmittance than the first polarizing plate 10 is disposed on the side (back light side) opposite to the visible side. This is because, when a polarizing plate having a larger transmittance is disposed on the back light side so as to let the light from the back light be incident into the liquid crystal cell 30 as much as possible, it will be easier to obtain a high brightness (white brightness) in displaying white images and color images. Also, the liquid crystal panel 100 according to the present invention has a construction such that the first polarizing plate 10 having a smaller transmittance than the second polarizing plate 20 is disposed on the visible side. This is because, when a polarizing plate having a smaller transmittance is disposed on the visible side so as to let the light from the back light be as less liable to be leaked to the visible side as possible, it will be easier to suppress to a low brightness (black brightness) in displaying black images. Therefore, by disposing the first polarizing plate 10 having a smaller transmittance on the visible side of the liquid crystal cell 30 and disposing the second polarizing plate 20 having a larger transmittance on the side opposite to the visible side, the contrast ratio mainly in the front direction of the liquid crystal panel can be enhanced. Further, as described above, the liquid crystal panel 100 according to the present invention has a construction such that the first retardation layer 12 whose refractive index ellipsoid satisfies a relationship of nz > nx = ny is disposed between the liquid crystal cell 30 and the first polarizer 11 (or the second polarizer 21), so that the contrast ratio mainly in the oblique direction can be enhanced. From the above-described reasons, the liquid crystal panel 100 according to the present invention can exhibit a high contrast ratio both in the front direction and in the oblique direction.

Here, when the difference (T₂ - T₁) between the transmittance (T₂) of the second polarizing plate 20 and the transmittance (T₁) of the first polarizing plate 10 is too small, it will be difficult to enhance the contrast ratio in the front direction of the liquid crystal panel 100 sufficiently. On the other hand, in order to increase the above difference (T₂ - T₁) of transmittance, it is sufficient to increase the transmittance of the second polarizing plate 20 or to decrease the transmittance of the first polarizing plate 10. However, when the transmittance of the second polarizing plate 20 is too large, the polarization degree of the second polarizing plate 20 will decrease to raise the black brightness of the liquid crystal panel 100, thereby raising a fear of lowering the contrast ratio in the front direction of the liquid crystal panel 100. Also, when the transmittance of the first polarizing plate 10 is too small, the white brightness of the liquid crystal panel 100 decreases, thereby raising a fear of lowering the contrast ratio in the front direction of the liquid crystal panel 100. Therefore, the above difference (T₂ - T₁) is preferably limited within a predetermined range. Specifically, the above difference (T₂ - T₁) is preferably from 0.1 to 6.0%, more preferably from 0.1 to 5.0%, further more preferably from 0.2 to 4.5%, and most preferably from 0.3 to 4.2%. By setting the difference (T₂ - T₁) between the transmittance of the second polarizing plate 20 and the transmittance of the first polarizing plate 10 to be within the above range, a liquid crystal panel 100 having a further higher contrast ratio in the front direction can be obtained. Here, in order to obtain the difference (T₂ - T₁) of transmittance within the above range and to obtain a sufficiently practicable white brightness / black brightness of the liquid crystal panel 100, the transmittance of the first polarizing plate 10 is preferably from 38.3 to 43.3%, and the transmittance of the second polarizing plate 20 is preferably from 41.1 to 44.3%. Also, by setting the transmittance of the first polarizing plate 10 and the second polarizing plate 20 to be within the above range, the polarization degree of each of the polarizing plates 10, 20 can be increased to 99% or more.

As shown in Fig1, In the liquid crystal panel 100 of the present invention, preferably, the other one polarizing plate of the first polarizing plate 10 and the second polarizing plate 20 is provided with a second retardation layer 22 which is disposed between the liquid crystal cell 30 and the other one polarizer of the first polarizer 11 and the second polarizer 12, and whose refractive index ellipsoid satisfies a relationship of nx = nz > ny. In the example shown in Fig. 1A, the second polarizing plate 20 disposed on the side opposite to the visible side is provided with a second retardation layer 22 which is disposed between the liquid crystal cell 30 and the second polarizer 21 and whose refractive index ellipsoid satisfies a relationship of nx = nz > ny. In the example shown in Fig. 1B, the first polarizing plate 10 disposed on the visible side is provided with a second retardation layer 22 which is disposed between the liquid crystal cell 30 and the first polarizer 11 and whose refractive index ellipsoid satisfies a relationship of nx = nz > ny. By being provided with such a second retardation layer 22, a liquid crystal panel 100 having a further higher contrast ratio in the oblique direction can be obtained.

In the liquid crystal panel 100 shown in Fig. 1, the first polarizing plate 10 and the second polarizing plate 20 are disposed so that the absorption axis direction (the direction of an arrow A shown in Fig. 1) of the first polarizer 11 and the absorption axis direction (the direction of an arrow B shown in Fig. 1) of the second polarizer 21 will be substantially perpendicular to each other. Also, the second retardation layer 22 is disposed so that a slow axis direction (the direction of an arrow C shown in Fig. 1) of the second retardation layer 22 and an absorption axis direction of the polarizer included in the one polarizing plate of the first polarizing plate 10 and the second polarizing plate 20 that is provided with the first retardation layer 12 are substantially perpendicular to each other. Specifically, in the example shown in Fig. 1A, the second retardation layer 22 is disposed so that a slow axis direction of the second retardation layer 22 and an absorption axis direction of the first polarizer 11 included in the first polarizing plate 10 that is provided with the first retardation layer 12 are substantially perpendicular to each other. In other words, the second retardation layer 22 is disposed so that the slow axis direction of the second retardation layer 22 and the absorption axis direction of the second polarizer 21 that is included in the second polarizing plate 20 provided with the second retardation layer 22 will be substantially parallel with each other. Also, in the example shown in Fig. 1B, the second retardation layer 22 is disposed so that a slow axis direction of the second retardation layer 22 and an absorption axis direction of the second polarizer 21 included in the second polarizing plate 20 that is provided with the first retardation layer 12 are substantially perpendicular to each other. In other words, the second retardation layer 22 is disposed so that the slow axis direction of the second retardation layer 22 and the absorption axis direction of the first polarizer 11 that is included in the first polarizing plate 10 provided with the second retardation layer 22 will be substantially parallel with each other. Further, the second retardation layer 22 and the liquid crystal cell 30 are disposed so that the slow axis direction of the second retardation layer 22 and the slow axis direction of the liquid crystal cell 30 (the initial orientation direction) (the direction of the arrow D shown in Fig. 1) will be substantially perpendicular to each other. Here, the arrows B, C shown in Fig. 1A and the arrows B, D shown in Fig. 1B are drawn as being arrows extending in the up-and-down direction for the sake of illustration.
Actually, however, those arrows are arrows that extend in a direction perpendicular to the document sheet of Fig. 1.

### <C. liquid crystal cell>

As the liquid crystal cell 30 used in the present invention, an arbitrary suitable one can be adopted. Examples of the liquid crystal cell 30 can include a liquid crystal cell of active matrix type using a thin film transistor, a liquid crystal cell of simple matrix type such as represented by a super twist nematic liquid crystal display device, and the like.

The liquid crystal cell 30 is preferably provided with a pair of substrates and a liquid crystal layer sandwiched between the pair of substrates and serving as a displaying medium. On one substrate (active matrix substrate), a switching element (representatively, a TFT) that controls electro-optical properties of the liquid crystal as well as a scanning line that gives a gate signal and a signal line that gives a source signal to this switching element are disposed. On the other substrate (color filter substrate), a color filter is disposed. The above-described color filter may be disposed on the above-described active matrix substrate. Nevertheless, in the case where an RGB three-color light source is used as the illumination means of the liquid crystal display device like the field sequential system, the above-described color filter may be omitted. The interval between the two substrates is controlled by a spacer. On the side of each substrate that is brought into contact with the liquid crystal layer, for example, an orientation film made of polyimide is disposed.

The liquid crystal cell 30 is preferably made to be a liquid crystal cell that is homogeneously oriented in a state in which no electric field is present. That is, the liquid crystal cell 30 is preferably provided with a liquid crystal layer containing liquid crystal molecules that are oriented in a homogeneous arrangement in a state in which no electric field is present. Here, the "homogeneous arrangement" refers to a state in which the orientation vectors of the above-described liquid crystal molecules are arranged uniformly in parallel relative to the substrate plane as a result of interaction between the liquid crystal molecules and the substrate subjected to an orientation treatment. Here, in the present specification, the above-described homogeneous arrangement includes also a case in which the liquid crystal molecules are slightly tilted relative to the substrate plane, namely a case in which the liquid crystal molecules have a pre-tilt angle. The above-described pre-tilt angle is typically 10° or less.

A liquid crystal cell provided with a liquid crystal layer containing liquid crystal molecules that are oriented in a homogeneous arrangement in a state in which no electric field is present has representatively a refractive index ellipsoid satisfying a relationship of nx > ny = nz. Here, "ny = nz" includes a case in which ny and nz are substantially identical as well as a case in which ny and nz are completely identical.

Examples of a representative example of the above-described liquid crystal cell, according to the classification by the driving mode can include liquid crystal cells of in-plane switching (IPS) mode, fringe field switching (FFS) mode, ferroelectric liquid crystal (FLC) mode, and the like.

In the case where the liquid crystal cell 30 is provided with a liquid crystal layer containing liquid crystal molecules that are homogeneously oriented in a state in which no electric field is present, the liquid crystal panel 100 of the present invention may be either an O-mode or an E-mode. The "liquid crystal panel of O-mode" refers to a liquid crystal panel in which the absorption axis direction of the polarizer disposed on the back light side of the liquid crystal cell and the initial orientation direction of the liquid crystal cell (the direction in which the in-plane refractive index of the liquid crystal cell attains the maximum in a state in which no electric field is present) are substantially parallel with each other, like an example shown in Fig. 1B. Also, the "liquid crystal panel of E-mode" refers to a liquid crystal panel in which the absorption axis direction of the polarizer disposed on the back light side of the liquid crystal cell and the initial orientation direction of the liquid crystal cell are substantially perpendicular to each other, like an example shown in Fig. 1A.

In the case where the liquid crystal panel 100 of the present invention is in an O-mode, the contrast ratio in the front direction can be outstandingly enhanced as compared with a liquid crystal panel in which the transmittances of the two sheets of polarizing plates disposed on both sides of the liquid crystal cell are identical. On the other hand, even when the liquid crystal panel 100 of the present invention is in an E-mode, the contrast ratio in the front direction can be enhanced.

Examples of a commercially available liquid crystal display device adopting a liquid crystal cell whose refractive index ellipsoid satisfies a relationship of nx > ny = nz can include a 20V-type wide liquid crystal television set (trade name: "Wooo") manufactured by Hitachi Ltd., a 19-type liquid crystal display (trade name: "ProliteE481S-1") manufactured by Iiyama Co., Ltd., a 17-type TFT liquid crystal display (trade name:
"FlexAcan L565") manufactured by Nanao Co., Ltd., a tablet PC (trade name: "M1400") manufactured by Motion Computing Co., Ltd., and others.

### <D. first polarizing plate and second polarizing plate>

As described previously, the first polarizing plate 10 and the second polarizing plate 20 used in the present invention include a first polarizer 11 and a second polarizer 21, respectively.

### <D-1. polarizer>

The first polarizer 11 and the second polarizer 21 are not particularly limited as long as they can convert natural light or polarized light into linearly polarized light, so that a conventionally known one can be used. As the polarizers 11, 21, it is preferable to use a dyed stretched film dyed with a dichroic substance, for example.

The above-described dyed stretched film is typically a stretched film containing, as a major component, a polyvinyl alcohol series resin that contains iodine or a dichroic dye. The dyed stretched film can be obtained by a production method through the steps including a swelling step of swelling a long non-stretched film containing, as a major component, a polyvinyl alcohol series resin, a dyeing step of impregnating the film with a dichroic substance such as iodine, a cross-linking step of cross-linking the film with a cross-linking agent containing boron, a stretching step of stretching the film at a predetermined magnification, and other steps. For the thickness of the polarizer, an appropriate value is suitably selected, and is preferably 5 µm to 50 µm, more preferably 10 µm to 30 µm.

In the case where a stretched film containing, as a major component, a polyvinyl alcohol series resin that contains iodine as the first polarizer 11 and the second polarizer 21 are used, the iodine content of each of the polarizers 11, 21 can be controlled, for example, by adjusting the iodine concentration in a dyeing bath used in the dyeing step. Then, by adjusting the iodine content of the first polarizer 11 and the second polarizer 21, the transmittance of each of the polarizers 11, 21 can be adjusted, and further the transmittance of the first polarizing plate 10 and the second polarizing plate 20 can be adjusted. In other words, by setting the iodine content of the first polarizer 11 to be higher than the iodine content of the second polarizer 21, the transmittance of the second polarizer 21 can be set to be higher than the transmittance of the first polarizer 11, and further the transmittance of the second polarizing plate 20 can be set to be higher than the transmittance of the first polarizing plate 10.

Specifically, in order to set the difference between the transmittance of the second polarizing plate 20 and the transmittance of the first polarizing plate 10 to be from 0.1 to 6.0%, it is preferable to set the difference between the iodine content of the first polarizer 11 and the iodine content of the second polarizer 21 to be from 0.1 to 2.6 wt%. Also, in order to set the transmittance of the first polarizing plate 10 to be from 38.3 to 43.3% and to set the transmittance of the second polarizing plate 20 to be from 41.1 to 44.3%, it is preferable to set the iodine content of the first polarizer 11 and the second polarizer 21 to be from 1.8 to 5.0 wt%.
However, the adjustment of the difference between the transmittance of the second polarizing plate 20 and the transmittance of the first polarizing plate 10 as well as the transmittance of the first polarizing plate 10 and the second polarizing plate 20 can be made by adjustment of the transmittance of a protective layer or the like that can be laminated on the polarizers 11, 12 as will be described later, in addition to the transmittance of the first retardation layer 12 and the second retardation layer 22 besides the adjustment of the iodine content of the first polarizer 11 and the second polarizer 21 as described above.

### <D-2. retardation layer>

The first retardation layer 12 has a refractive index ellipsoid satisfying a relationship of nz > nx = ny. This "nx = ny" includes also a case in which nx and ny are substantially identical as well as a case in which nx and ny are completely identical. The case in which nx and ny are substantially identical is, for example, such that Re[590] is smaller than 10 nm, preferably smaller than 5 nm. The Re[590] of the first retardation layer 12 is preferably smaller than 10 nm, and more preferably smaller than 5 nm. Also, Rth[590] of the first retardation layer 12 can be suitably designed to be an appropriate value in accordance with an intended object; however, it is preferably from -150 to -40 nm, more preferably from -120 to - 70 nm, and still more preferably from -100 to -90 nm.

The second retardation layer 22 has a refractive index ellipsoid satisfying a relationship of nx = nz > ny. This "nx = nz" includes also a case in which nx and nz are substantially identical as well as a case in which nx and nz are completely identical. The case in which nx and nz are substantially identical is, for example, such that Rth[590] is from -10 to 10 nm, preferably from -5 to 5 nm. The Re[590] of the second retardation layer 22 can be suitably designed to be an appropriate value in accordance with an intended object; however, it is preferably from 200 to 300 nm, more preferably from 220 to 270 nm. Also, Rth[590] of the second retardation layer 22 can be suitably designed to be an appropriate value in accordance with an intended object; however, it is preferably from -10 to 10 nm, more preferably from -5 to 5 nm.

The transmittance of the first retardation layer 12 and the second retardation layer 22 is preferably 80% or more, more preferably 90% or more. Also, the haze values of these layers are preferably 3% or less, more preferably 1% or less. However, the haze value is a value measured in accordance with JIS-K7105. Also, the absolute value of the photoelastic coefficient of the first retardation layer 12 and the second retardation layer 22 is preferably 50 × 10⁻¹² (m²/N) or less, more preferably 10 × 10⁻¹² (m²/N) or less.

As the second retardation layer 22, a film containing a polymer exhibiting a negative intrinsic birefringence can be preferably used. In the present specification, the term "polymer exhibiting a negative intrinsic birefringence" refers to a polymer in which a longitudinal axis direction of the refractive index ellipsoid is generated in a direction perpendicular to the orientation direction of the polymer chain when the polymer is oriented.

Examples of the above-described polymer exhibiting a negative intrinsic birefringence can include a polymer in which a chemical bond and/or a substituent group having a large polarization anisotropy such as an aromatic ring or a carbonyl group is introduced into the side chain of the polymer. The above-described polymer exhibiting a negative intrinsic birefringence is preferably a methacrylate series polymer, a styrene series polymer, a maleimide series polymer, or the like, and these can be used either alone as one kind or as a mixture of two or more kinds.

These methacrylate series polymer, styrene series polymer, and maleimide series polymer can be obtained, for example, by addition polymerization of a methacrylate series monomer, a styrene series monomer, a maleimide series monomer, or the like.

Examples of the above-described methacrylate series polymer can include methyl methacrylate, butyl methacrylate, cyclohexyl methacrylate, or the like.

Examples of the above-described styrene series monomer can include styrene, α-methylstyrene, o-methylstyrene, p-methylstyrene, p-chlorostyrene, p-nitrostyrene, p-aminostyrene, p-carboxystyrene, p⁻ phenylstyrene, 2,5-dichlorostyrene, p-t-butylstyrene, or the like.

Examples of the above-described maleimide series monomer can include N-ethylmaleimide, N-cyclohexylmaleimide, N-phenylmaleimide, N-(2-methylphenyl)maleimide, N-(2-ethylphenyl)maleimide, N-(2-n-propylphenyl)maleimide, N-(2-isopropylphenyl)maleimide, N-(2,6-dimethylphenyl)maleimide, N-(2,6-diethylphenyl)maleimide, N-(2,6-diisopropylphenyl)maleimide, N-(2-methyl-6-ethylphenyl)maleimide, N-(2-chlorophenyl)maleimide, N-(2,6-dibromophenyl)maleimide, N-(2-biphenyl)maleimide, N-(2-cyanophenyl)maleimide, or the like. The above-described maleimide series monomers can be obtained, for example, from Tokyo Chemical Industry Co., Ltd.

The above-described polymer exhibiting a negative intrinsic birefringence may be one in which other monomers are copolymerized in order to improve the brittleness and the molding processability. These other monomers may be, for example, ethylene, propylene, 1-butene, isobutene, 1,3-butadiene, 2-methyl-1-butene, 2-methyl-1-pentene, 1-hexene, acrylonitrile, methyl acrylate, methyl methacrylate, maleic anhydride, vinyl acetate, or the like.

In the case where the above-described polymer exhibiting a negative intrinsic birefringence is a copolymer of a styrene series monomer and other monomers, the content of the styrene series monomer is preferably from 50 mol% to 80 mol%. In the case where the above-described polymer exhibiting a negative intrinsic birefringence is a copolymer of a maleimide series monomer and other monomers, the content of the maleimide series monomer is preferably from 2 mol% to 50 mol%. When the content of the polymer exhibiting a negative intrinsic birefringence is within the above range, a film being excellent in the brittleness and the molding processability can be obtained.

Preferably, the above-described polymer exhibiting a negative intrinsic birefringence is a styrene-maleic anhydride copolymer, a styrene-(meth)acrylonitrile copolymer, a styrene-(meth)acrylate copolymer, a styrene-maleimide copolymer, a vinyl ester-maleimide copolymer, or an olefin-maleimide copolymer. These may be used either alone as one kind or as a mixture of two or more kinds. These polymers show a high negative intrinsic birefringence and is excellent in heat resistance. Here, these polymers can be obtained, for example, from NOVA Chemicals Japan Ltd. or Arakawa Chemical Industries, Ltd..

More preferably, the above-described polymer exhibiting a negative intrinsic birefringence is one having at least a repeat unit represented by the following general formula (I). Such a polymer can be obtained by using an N-phenyl substituted maleimide in which a phenyl group having a substituent at least at an ortho position is introduced as an N-substituent group of the maleimide series monomer of the starting source material. Such a polymer exhibits a further higher negative intrinsic birefringence, and is excellent in heat resistance and mechanical strength.

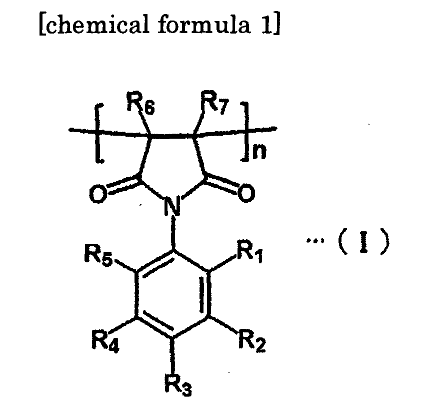

In the above general formula (I), R₁ to R₅ are each independently a hydrogen atom, a halogen atom, a carboxylic acid, a carboxylic acid ester, a hydroxy group, a nitro group, or a straight-chain or branched-chain alkyl group or alkoxy group having 1 to 8 carbon atoms (however, R₁ and R₅ are not simultaneously a hydrogen atom); R₆ and R₇ are a hydrogen atom, or a straight-chain or branched-chain alkyl group or alkoxy group having 1 to 8 carbon atoms; and n represents an integer of two or more.

The weight-average molecular weight (Mw) of the above-described polymer exhibiting a negative intrinsic birefringence is preferably from 20,000 to 500,000. Here, the weight-average molecular weight is a value measured by the gel permeation chromatography method (polystyrene standard) with use of a tetrahydrofuran solvent. The glass transition temperature (Tg) of the above-described polymer exhibiting a negative intrinsic birefringence is preferably from 110°C to 185°C. With the above-described polymer, a film being excellent in the thermal stability and in the stretching property can be obtained. Here, the glass transition temperature (Tg) can be determined by the DSC method according to JIS K 7121.

The second retardation layer 22 (the retardation layer whose refractive index ellipsoid satisfies a relationship of nx = nz > ny) can be obtained, for example, by stretching the above polymer exhibiting a negative intrinsic birefringence in a longitudinal direction or in a lateral direction. Examples of the method of this stretching can include the longitudinal monoaxial stretching method or the lateral monoaxial stretching method.
As the stretching means, an arbitrary suitable stretching machine such as a roll stretching machine or a tenter stretching machine can be used. For the stretching condition, it is preferable to stretch the polymer at a temperature higher than the glass transition temperature of the polymer and at a magnification exceeding one time and smaller than or equal to three times.

Also, as the first retardation layer 12, a solidified layer or a hardened layer of a liquid crystalline composition that is oriented in homeotropic arrangement can be used.

Here, in the present specification, the "homeotropic arrangement" refers to a state in which the liquid crystal compound contained in the liquid crystalline composition is oriented uniformly in parallel relative to the normal line direction of the retardation layer. Also, the "solidified layer" refers to the one in a state in which a liquid crystalline composition in a softened state, in a molten state or in a solution state has been cooled and solidified. The "hardened layer" refers to the one that has come to a stable state of being insoluble and unmeltable or slightly soluble and slightly meltable in which the above-described liquid crystalline composition has been cross-linked by heat, a catalyst, light, and/or radioactive rays. Here, the above "hardened layer" includes the one that has become a hardened layer by passing through a solidified layer of the liquid crystalline composition.

Also, in the present specification, the "liquid crystalline composition" refers to the one that exhibits a liquid crystal phase and showing a liquid crystallinity. Examples of the above-described liquid crystal phase can include a nematic liquid crystal phase, a smectic liquid crystal phase, a cholesteric liquid crystal phase, or the like. As the first retardation layer 12 of the present invention, it is preferable to use one exhibiting a nematic liquid crystal phase because a retardation layer having a high transparency can be obtained. The above liquid crystal phase is typically generated by a liquid crystal compound having a mesogen group made of a cyclic unit or the like in a molecular structure.

The content of the liquid crystal compound in the above liquid crystalline composition is preferably from 40 to 100 (weight ratio), more preferably from 50 to 99 (weight ratio), and still more preferably from 70 to 98 (weight ratio), relative to 100 of the total solid components. The above liquid crystalline composition may contain various additives such as a leveling agent, a polymerization initiator, an orienting agent, a thermal stabilizer, a smoothing agent, a lubricant, a plasticizer, an antistatic agent, or the like within a range that does not deteriorate the object of the present invention.

Examples of the mesogen group made of a cyclic unit or the like in the above liquid crystal compound can include a biphenyl group, a phenylbenzoate group, a phenylcyclohexane group, an azoxybenzene group, an azomethyne group, an azobenzene group, a phenylpyrimidine group, a diphenylacetylene group, a diphenylbenzoate group, a bicyclohexane group, a cyclohexylbenzene group, a terphenyl group, or the like. Here, the terminal of these cyclic units may have a substituent group such as a cyano group, an alkyl group, an alkoxy group, or a halogen group. Among these, as the mesogen group made of a cyclic unit or the like, those having a biphenyl group or a phenylbenzoate group are preferably used.

Examples of the above-described liquid crystal compound, those having at least one polymerizable functional group in a part of the molecule are preferably used. As the above-described polymerizable functional group can include an acryloyl group, a methacryloyl group, an epoxy group, a vinyl ether group, or the like. Among these, an acryloyl group or a methacryloyl group is preferably used. Also, as the above-described liquid crystal compound, those having two polymerizable functional groups in a part of the molecule are preferable. This is because the cross-linked structure generated by the polymerization reaction can improve the durability. Examples of a specific example of a liquid crystal compound having two or more polymerizable functional groups in a part of the molecule can include a trade name "PaliocolorLC242" manufactured by BASF Co., Ltd..

Also, as the first retardation layer 12, a solidified layer or a hardened layer made from a liquid crystalline composition containing a liquid crystal compound disclosed in Japanese Patent Application Laid-Open No. 2002-174725 and obtained by orientation of the liquid crystalline composition in homeotropic arrangement is more preferably used. Still more preferably, a hardened layer made from a liquid crystalline composition containing a liquid crystal polymer represented by the following general formula (II) and obtained by orientation of the liquid crystalline composition in homeotropic arrangement is used. Most preferably, a solidified layer or a hardened layer made from a liquid crystalline composition containing a liquid crystal polymer represented by the following general formula (II) and a liquid crystal compound having at least one polymerizable functional group in a part of the molecule and obtained by orientation of the liquid crystalline composition in homeotropic arrangement is used. With such a liquid crystalline composition, a retardation layer being excellent in optical uniformity and having a high transparency can be obtained.

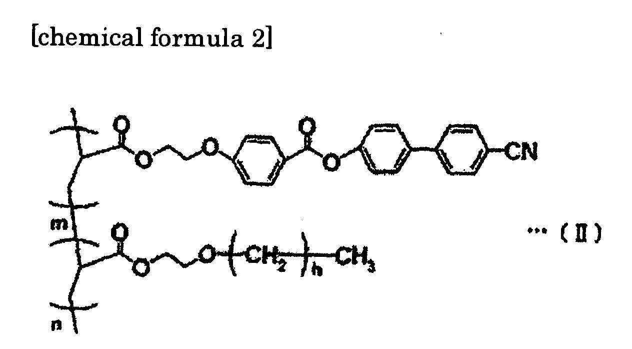

In the above general formula (II), h is an integer from 14 to 20, and m is from 50 to 70 and n is from 30 to 50 when the sum of m and n is assumed to be 100.

Examples of a method of obtaining a solidified layer or a hardened layer of a liquid crystalline composition oriented in homeotropic arrangement can include a method of applying a molten product or a solution of the liquid crystalline composition on a polarizer 11 (or a polarizer 21) or on a suitable base material having been subjected to an orientation treatment. Preferably, it is a method of applying a solution obtained by dissolving a liquid crystalline composition in a solvent (which is also referred to as application solution) on a polarizer 11 (or a polarizer 21) or on a suitable base material having been subjected to an orientation treatment. By the above method, a retardation layer without the orientation defects (which is also referred to as disclination) of the liquid crystalline composition can be obtained. Here, preferably, the molten product or solution of the liquid crystalline composition is applied on a suitable base material having been subjected to an orientation treatment. Then, by transcribing the first retardation layer 12 formed on this base material onto the polarizer 11 (or the polarizer 21), the polarizer 11 (or the polarizer 21) and the first retardation layer 12 can be laminated.

The total solid component concentration of the above application solution may differ depending on the solubility, the application viscosity, the wettability onto the base material, the thickness after the application, or the like; however, it is typically such that the solid component is from 2 to 100 (weight ratio), more preferably from 10 to 50 (weight ratio), still more preferably from 20 to 40 (weight ratio), relative to 100 of the solvent. When it is within the above range, a retardation layer having a high surface uniformity can be obtained. As the above-described solvent, a liquid substance that dissolves the liquid crystalline composition uniformly to form a solution is preferably used.

The above-described base material is not particularly limited, so that, in addition to a glass base material such as a glass plate or a quartz substrate or a polymer base material such as a film or a plastic substrate, a metal base material such as aluminum or iron, an inorganic base material such as a ceramic substrate, a semiconductor base material such as a silicon wafer, or the like are also used. An especially preferable base material is a polymer base material. This is because the polymer base material is excellent in the lubricity of the base material surface and in the wettability of the liquid crystalline composition, and moreover it can be produced continuously with a roll, thereby the productivity can be improved outstandingly.

For the above-described orientation treatment, it is sufficient to select a suitable one in accordance with the kind of the liquid crystal compound, the material quality of the base material, and the like. Specific examples can include (A) the base material surface direct orientation treatment method, (B) the base material surface indirect orientation treatment method, and (C) the base material surface deformation orientation treatment method. In the present invention, among these, (A) the base material surface direct orientation treatment method is preferably used. This is because, since it is excellent in the orientation property of the liquid crystal compound, as a result, a retardation layer is excellent in optical uniformity and has a high transparency. Here, in the present specification, (A) the "base material surface direct orientation treatment method" refers to a method of forming an orienting agent into a thin layer form on a base material surface by a method such as solution application (wet process) or plasma polymerization or sputtering (dry process), and arranging the arrangement direction of the liquid crystal compound to be constant by utilizing the interaction between the orienting agent and the liquid crystal compound.

Examples of a specific orienting agent that is subjected to solution application on the base material surface can include lecithin, stearic acid, hexadecyltrimethylammonium bromide, octadecylamine hydrochloride, monobasic carboxylic acid chromium complex (examples: myristic acid chromium complex, perfluorononanoic acid chromium complex, and the like), organic silane (examples: silane coupling agent, siloxane, or the like), or the like. Also, specific examples of the orienting agent that is subjected to plasma polymerization on the base material surface can include perfluorodimethylcyclohexane, tetrafluoroethylene, or the like. Further, specific examples of the orienting agent that is subjected to sputtering on the base material surface can include polytetrafluoroethylene or the like.
As the above-described orienting agent, a particularly preferable one is an organic silane. This is because it is excellent in the workability, the quality of the product, and the orientation performance of the liquid crystal compound. Specific example of the orienting agent of organic silane can include an orienting agent (trade name: "Ethyl Silicate" manufactured by Colcoat Co., Ltd.) containing tetraethoxysilane as a major component.

The method of application of the above-described application solution on the base material is not particularly limited, so that an application method using an arbitrary suitable coater can be used.

As a method of fixing the liquid crystalline composition that has been oriented in homeotropic arrangement, it is sufficient to adopt any one method of solidification and/or hardening in accordance with the kind of the liquid crystal compound to be used. For example, in the case where the liquid crystalline composition contains a liquid crystal polymer as the liquid crystal compound, a practically sufficient mechanical strength can be used by solidifying the molten product or the solution containing the liquid crystal polymer. On the other hand, in the case where the liquid crystalline composition contains a liquid crystal monomer as the liquid crystal compound, a sufficient mechanical strength may not be obtained by solidifying the solution of the liquid crystal polymer. In such a case, a practically sufficient mechanical strength can be obtained by using a polymerizable liquid crystal monomer having at least one polymerizable functional group in a part of the molecule and hardening it by radiation of ultraviolet rays.

The base material having been subjected to application of the application solution may be subjected to a drying process before and/or after radiation of ultraviolet rays. The temperature (drying temperature) in the above drying process is preferably from 50 to 130 °C, more preferably from 80 to 100°C. Also, the time (drying time) for the above drying process is, for example, 1 to 20 minutes, preferably from 1 to 15 minutes, more preferably from 2 to 10 minutes. This is because, by setting the drying temperature and the drying time within the above range, a retardation layer having a good optical uniformity can be obtained.

### <D-3. bonding of polarizer and retardation layer>

The first retardation layer 12 is bonded to the first polarizer 11 (the case of the example shown in Fig. 1A) or to the second polarizer 21 (the case of the example shown in Fig. 1B) via a bonding layer (not illustrated). As will be described later, in the case where a protective layer (protective film) is laminated on one or both surfaces of the polarizer 11, 21, the first retardation layer 12 is bonded to the protective layer via a bonding layer. The same applies to the second retardation layer 22 as well.

As the above-described bonding layer, an arbitrary appropriate one can be selected as long as it bonds the surfaces of adjacent members and integrates them with a practically sufficient bonding force and bonding time. Examples of a material that forms the bonding layer can include an adhesive agent, a pressure sensitive agent, an anchor coat agent, or the like. The bonding layer may have a multiple-layer structure in which an anchor coat layer is formed on the surface of the body to be bonded and an adhesive agent layer or a pressure sensitive agent layer is formed thereon, or may be a thin layer (which is also called a hair line) that cannot be visible by a naked eye.

In particular, in the case where the later-mentioned protective layer (protective film) is not laminated on the first polarizer 11 and the second polarizer 22 (namely, when the first polarizer 11 (or the second polarizer 21) is directly bonded to the first retardation layer 12 (or the second retardation layer 22)), an adhesive agent is preferably used as a material for forming the adhesive layer. As this adhesive agent, an adhesive agent having an arbitrary suitable property, form, and adhesive function can be used in accordance with an intended object; however, a water-soluble adhesive agent being excellent in transparency, bonding property, workability, quality of the product, and economical property is preferably used. This water-soluble adhesive agent may contain, for example, at least one of water soluble natural polymer and synthetic polymer. Examples of the above-described natural polymer can include protein, starch, or the like. Examples of the above-described synthetic polymer can include a resol resin, a urea resin, a melamine resin, a polyethylene oxide, a polyacrylamide, polyvinylpyrrolidone, an acrylic acid ester, a methacrylic acid ester, a polyvinyl alcohol series resin, or the like. Among these, a water-soluble adhesive agent containing polyvinyl alcohol series resin is preferably used, and a water-soluble adhesive agent containing denatured polyvinyl alcohol series resin having an acetoacetyl group (acetoacetyl-group-containing polyvinyl alcohol series resin) is more preferably used.

Examples of the above-described polyvinyl alcohol series resin can include a saponified product of polyvinyl acetate, a derivative of the above-described saponified product, a saponified product of a copolymer from vinyl acetate and a monomer having a copolymerizability, a denatured polyvinyl alcohol obtained by acetalization, urethanization, etherization, graftization, phosphorylation, or the like of polyvinyl alcohol, or the like. Examples of the above-described monomer can include unsaturated carboxylic acid such as maleic acid, maleic anhydride, fumaric acid, crotonic acid, itaconic acid, acrylic acid, or methacrylic acid, and esters thereof, ethylene, α-olefin such as propylene, allylsulfonic acid, metallylsulfonic acid, sodium allylsulfonate, sodium metallylsulfonate, sodium sulfonate, sodium sulfonate monoalkyl malate, sodium disulfonate alkyl malate, N-methylolacrylamide, alkali salt of acrylamidealkylsulfonic acid, N-vinylpyrrolidone, N-vinylpyrrolidone derivative, or the like. These resins may be used either alone or as a combination of two or more kinds.

An average polymerization degree of the above-described polyvinyl alcohol series resin is preferably within a range from 100 to 5000, more preferably within a range from 1000 to 4000, in view of the adhesiveness. An average saponification degree of the above-described polyvinyl alcohol series resin is preferably within a range from 85 to 100 mol%, more preferably within a range from 90 to 100 mol%, in view of the adhesiveness.

The above-described acetoacetyl-group-containing polyvinyl alcohol series resin can be obtained, for example, through reaction of polyvinyl alcohol series resin with diketene by an arbitrary method. For example, specific examples include a method of adding diketene to a dispersion obtained by dispersing a polyvinyl alcohol series resin into a solvent such as acetic acid, a method of adding diketene to a solution obtained by dissolving a polyvinyl alcohol series resin into a solvent such as dimethylformamide or dioxane, a method of directly bringing diketene gas or liquid diketene into contact with a polyvinyl alcohol series resin, or the like method.

The acetoacetyl group denaturalization degree of the above-described acetoacetyl-group-containing polyvinyl alcohol series resin is, for example, 0.1 mol% or more. By setting the acetoacetyl group denaturalization degree to be within this range, a liquid crystal panel being more excellent in water resistance can be obtained. The above-described acetoacetyl group denaturalization degree is preferably within a range from 0.1 to 40 mol%, more preferably within a range from 1 to 20 mol%, and still more preferably within a range from 2 to 7 mol%. The above-described acetoacetyl group denaturalization degree is a value measured, for example, by the nuclear magnetic resonance (NMR) method.

A water-soluble adhesive agent containing the above-described polyvinyl alcohol series resin may further contain a cross-linking agent. This is because the water resistance can be further improved. As the above-described cross-linking agent, an arbitrary suitable cross-linking agent can be adopted. The above-described cross-linking agent is preferably a compound having at least two functional groups having a reactivity with the above-described polyvinyl alcohol series resin. As the above-described cross-linking agent, an arbitrary suitable cross-linking agent can be used in accordance with the intended object; however, an amino-formaldehyde resin or dialdehydes are preferable. As the above-described amino-formaldehyde resin, a compound having a methylol group is preferable. As the above-described dialdehydes, glyoxal is preferable. Among these, a compound having a methylol group is preferable, and methylolmelamine is more preferable.

The blending amount of the above-described cross-linking agent is, for example, within a range from 1 to 60 parts by weight relative to 100 parts by weight of the above-described polyvinyl alcohol series resin (preferably the above-described acetoacetyl-group-containing polyvinyl alcohol series resin). By setting the above-described blending amount to be within a range from 1 to 60 parts by weight, an adhesive layer being excellent in transparency, adhesiveness, and water-resistance can be formed. The upper limit of the above-described blending amount is preferably 50 parts by weight, more preferably 30 parts by weight, still more preferably 15 parts by weight, especially preferably 10 parts by weight, and most preferably 7 parts by weight. The lower limit of the above-described blending amount is preferably 5 parts by weight, more preferably 10 parts by weight, and still more preferably 20 parts by weight. Here, by using a later-mentioned metal compound colloid in combination, the stability in the case in which the blending amount of the above-described cross-linking agent is large can be further improved.

The above-described water-soluble adhesive agent containing a polyvinyl alcohol series resin may further contain a metal compound colloid. The above-described metal compound colloid may be, for example, one in which metal oxide fine particles are dispersed in a dispersion medium, or may be one that is electrostatically stabilized to have a continuous stability due to the interactive repulsion of the same kind of electric charge of the fine particles. The average particle size of the fine particles that form the above-described metal compound is not particularly limited; however, it is preferably within a range from 1 to 100 nm, more preferably within a range from 1 to 50 nm. This is because it can uniformly disperse the above-described fine particles into the adhesive layer, ensure the adhesiveness, and restrain the generation of knicks. Here, the tern "knicks" refers to the local unevenness defects that are generated at the bonding interface between adjacent members (for example, polarizer and transparent film).

As the above-described metal compound, an arbitrary suitable compound can be adopted. Examples of the above-described metal compound can include metal oxides such as alumina, silica, zirconia, and titania, metal salts such as aluminum silicate, calcium carbonate, magnesium silicate, zinc carbonate, barium carbonate, and calcium phosphate, and minerals such as Celite, talc, clay, and kaolin. Among these, it is preferably alumina.

The above-described metal compound colloid is present in a state of a colloid solution in which the above-described metal compound is dispersed in a dispersion medium. Examples of the above-described dispersion medium can include water and alcohols. The solid component concentration within the above-described colloid solution is, for example, within a range from 1 to 50 wt%. The above-described colloid solution may contain an acid such as nitric acid, hydrochloric acid, or acetic acid as a stabilizer.

The blending amount of the above-described metal compound (the solid component) colloid is preferably 200 parts by weight or less relative to 100 parts by weight of the above-described polyvinyl alcohol series resin.
By setting the above-described blending amount, the generation of knicks in a more appropriate manner while ensuring the adhesiveness can be restrained. The above-described blending amount is more preferably within a range from 10 to 200 parts by weight, still more preferably within a range from 20 to 175 parts by weight, and most preferably within a range from 30 to 150 parts by weight.

As a method of preparing the above-described adhesive agent, an arbitrary suitable method can be adopted. For example, in the case of an adhesive agent containing the above-described metal compound colloid, a method of blending the above-described metal compound colloid into a mixture obtained by mixing the above-described polyvinyl alcohol series resin and the above-described cross-linking agent in advance and adjusting the mixture to have a suitable concentration can be exemplified. Also the above-described cross-linking agent can be mixed while considering the time of use or the like after mixing the above-described polyvinyl alcohol series resin with the above-described metal compound colloid.

The resin concentration in the above-described adhesive agent is preferably within a range from 0.1 to 15 wt, more preferably within a range from 0.5 to 10 wt, in view of the applicability, the stability when being left to stand, or the like.

The pH of the above-described adhesive agent is preferably within a range from 2 to 6, more preferably within a range from 2.5 to 5, still more preferably within a range from 3 to 5, and most preferably within a range from 3.5 to 4.5. Generally, the surface electric charge of the above-described metal compound colloid can be controlled by adjusting the pH of the adhesive agent. The above-described surface electric charge is preferably a positive electric charge. By setting the above-described surface electric charge to be a positive electric charge, for example, the generation of knicks can be restrained in a more suitable manner.

The total solid component concentration of the above-described adhesive agent differs depending on the solubility, the application viscosity, the wettability of the above-described adhesive agent, the desired thickness of the adhesive, and the like. The above-described total solid component concentration is preferably within a range from 2 to 100 parts by weight relative to 100 parts by weight of the solvent. By setting the above-described total solid component concentration to be within this range, one can obtain an adhesive layer having a higher surface uniformity. The above-described total solid component concentration is more preferably within a range from 10 to 50 parts by weight, still more preferably within a range from 20 to 40 parts by weight.

The viscosity of the above-described adhesive agent is not particularly limited; however, the value as measured with the shear speed of 1000 (1/s) at 23°C is preferably within a range from 1 to 50 mPa s. By setting the viscosity of the above-described adhesive agent to be within this range, an adhesive layer being more excellent in surface uniformity can be obtained. The viscosity of the above-described adhesive agent is more preferably within a range from 2 to 30 mPa ·s, still more preferably within a range from 4 to 20 mPa ·s.

The glass transition temperature (Tg) of the above-described adhesive agent is not particularly limited; however, it is preferably within a range from 20 to 120°C, more preferably within a range from 40 to 100°C, still more preferably within a range from 50 to 90°C. The above-described glass transition temperature can be measured, for example, by a method according to JIS K 7127-1987 by the differential scanning colorimetry (DSC).

The above-described adhesive agent may further contain a coupling agent such as a silane coupling agent or a titanium coupling agent, various tackifier, an ultraviolet absorber, an antioxidant, a heat resistance stabilizer, a hydrolysis resistance stabilizer, and the like.

As an application method of the above-described adhesive agent, an arbitrary suitable method can be adopted. Examples of the above-described application method can include the spin coating method, the roll coating method, the flow coating method, the dip coating method, the bar coating method, and the like.

The thickness of the adhesive layer made of the adhesive agent is not particularly limited; however, it is preferably within a range from 0.01 to 0,15 µm. By setting the thickness of the adhesive layer made of the above-described adhesive agent, polarizing plates 10, 20 being excellent in durability without generating the exfoliation or floating up of the polarizers 11, 21 can be obtained, even if it is exposed to the high temperature and humidity enviroment. The thickness of the adhesive layer made of the above-described adhesive agent is more preferably within a range from 0.02 to 0.12 µm, still more preferably within a range from 0.03 to 0.09 µm.

### <D-4. protective layer>

The first polarizing plate 10 and the second polarizing plate 20 of the present invention is such that a protective layer (protective film) is laminated preferably on one surface of the first polarizer 11 and the second polarizer 21, more preferably on both surfaces thereof. The above-described protective film is not particularly limited as long as it is excellent in transparency, so that an appropriate one can be suitably used. The transmittance of the protective film is preferably 80% or more, more preferably 90% or more. Also, the haze value thereof is preferably 3% or less, more preferably 1% or less. Here, the method of measurement of the haze value is the same as in the case of the above-mentioned retardation layers 12, 22. Also, the above-described protective film is such that the absolute value of the photoelastic coefficient thereof is preferably 80 × 10⁻¹² (m²/N) or less, more preferably 30 × 10⁻¹² (m²/N) or less.

Examples of the protective film can include a film of an ester series polymer such as polyethylene terephthalate or polyethylene naphthalate; a cellulose series polymer such as diacetyl cellulose or triacetyl cellulose; an acryl series polymer such as polymethyl methacrylate; a styrene series polymer such as polystyrene or acrylonitrile styrene copolymer (AS resin); a polycarbonate series polymer, a norbornene series polymer, or the like. The thickness of the protective layer is not particularly limited; however, it is typically about 20 µm to 200 µm.

A protective film laminated between the first polarizer 11 and the first retardation layer 12 (the case shown in Fig. 1A) or the second retardation layer 22 (the case shown in Fig. 1B) in the first polarizing plate 10, and a protective film laminated between the second polarizer 21 and the second retardation layer 22 (the case shown in Fig. 1A) or the first retardation layer 12 (the case shown in Fig. 1B) in the second polarizing plate 20 (hereafter, these protective films may in some cases be referred to as "cell-side protective films") having a refractive index ellipsoid satisfying a relationship of nx >ny ≥ nz (nx > ny >nz or nx > ny = nz) may be used, and those satisfying a relationship of nx > ny = nz may be preferably used.
Here, the above "ny = nz" includes a case in which ny and nz are substantially identical as well as a case in which ny and nz are completely identical. The case in which ny and nz are substantially identical is, for example, such that Rth[590] - Re[590] is from -10 nm to 10 nm, preferably from -5 nm to 5 nm.

At least the above-described cell-side protective film preferably contains a norbornene series polymer. In the present invention, the "norbornene series polymer" refers to a (co)polymer obtained by using a norbornene series monomer having a norbornene ring in one part or in the whole of the starting source material (monomer). The above-described "(co)polymer" represents a homopolymer or a copolymer. The above-described cell-side protective film is typically fabricated by stretching a film containing a norbornene series polymer molded in a sheet form.

For the above described norbornene-series polymer, a norbornene series monomer having a norbornene ring (those having a double bond in a norbornane ring) is used as a starting source material. The above-described norbornene series polymer may have or may not have a norbornane ring in a constituent unit in a state of a (co)polymer. Examples of the norbornene series polymer having a norbornane ring in a constituent unit in a state of a (co)polymer can include tetracyclo[4.4.1^{2.5}.1^{7.10}.0]deca-3-ene, 8-methyltetracyclo[4.4.1^{2.5}.1^{7.10}.0]deca-3-ene, 8-methoxycarbonyltetracyclo[4.4.1^{2.5}1^{7.10}.0]deca-3-ene, or the like. The norbornene series polymer without having a norbornane ring in a constituent unit in a state of a (co)polymer is, for example, a (co)polymer obtained by using a monomer that will become a five-membered ring by cleavage. Examples of the monomer that will become a five-membered ring by cleavage can include norbornene, dicyclopentadiene, 5-phenylnorbornene, or the like, or a derivative of these. In the case where the above-described norbornene series polymer is a copolymer, the arrangement state of the molecules is not particularly limited, so that it may be a random copolymer, a block copolymer, or a graft copolymer.

Examples of the above-described norbornene series polymer can include (a) a polymer obtained by hydrogenation of an ring-opening (co)polymer of a norbornene series monomer, (b) a polymer obtained by addition (co)polymerization of a norbornene series monomer, or the like. The above-described ring-opening (co)polymer of a norbornene series monomer includes a polymer obtained by hydrogenation of an ring-opning copolymer of one or more kinds of norbornene series monomer with α-olefins, cycloalkenes, and/or non-conjugate dienes. The above-described polymer obtained by addition copolymerization of a norbornene series monomer includes a polymer obtained by addition type copolymerization of one or more kinds of norbornene series monomer with α-olefins, cycloalkenes, and/or non-conjugate dienes.

The above-described (a) polymer obtained by hydrogenation of an ring-opening (co)polymer of a norbornene series monomer can be obtained by metathesis reaction of a norbornene series monomer or the like to obtain an ring-opening (co)polymer and further by hydrogenation of the relevant ring-opening (co)polymer. Specific examples can include the method disclosed in paragraphs [0059] to [0060] of Japanese Patent Application Laid-Open (JP-A) No. 11-116780, the method disclosed in paragraphs [0035] to [0037] of Japanese Patent Application Laid-Open (JP-A) No. 2001-350017, or the like. The above-described (b) polymer obtained by addition (co)polymerization of a norbornene series monomer can be obtained, for example, by the method disclosed in the Example 1 of Japanese Patent Application Laid-Open (JP-A) No. 61-292601.

The weight-average molecular weight (Mw) of the above-described polymer is preferably from 20,000 to 500,000. Here, the weight-average molecular weight is a value measured by the gel permeation chromatography (GPC) method with use of tetrahydrofuran solvent. The glass transition temperature (Tg) of the above-described polymer is preferably from 110°C to 180°C. Here, the glass transition temperature (Tg) is a value determined by the DSC method according to JIS K 7121. By setting the weight-average molecular weight and the glass transition temperature to be within the above range, a film having a good heat resistance and moldability can be obtained.

Also, the above-described cell-side protective film may be a film containing a cellulose series polymer. A film containing the polymer will be a film exhibiting an optical biaxial property of nx > ny >nz by performing a predetermined process.

Examples of the above-described cellulose series polymer can include a cellulose series polymer disclosed in paragraphs [0106] to [0112] of Japanese Patent Application Laid-Open (JP-A) No. 2002-82225, a cellulose series polymer disclosed in paragraphs [0021] to [0034] of Japanese Patent No. 3450779, or the like.

Also, a cellulose series polymer substituted with acetyl group and propionyl group can be used. In the cellulose series polymer, the substitution degree of acetyl group can be shown by the "acetyl substitution degree (DSac)" showing how many in average of the three hydroxyl groups that are present in the repeat unit of cellulose are substituted with acetyl group. In the cellulose series polymer, the substitution degree of propionyl group can be shown by the "propionyl substitution degree (DSpr)" showing how many in average of the three hydroxyl groups that are present in the repeat unit of cellulose are substituted with propionyl group. The acetyl substitution degree (DSac) and the propionyl substitution degree (DSpr) can be determined by the method disclosed in paragraphs [0016] to [0019] of Japanese Patent Application Laid-Open (JP-A) No. 2003-315538.

The above-described cellulose series polymer is such that the acetyl substitution degree (DSac) and the propionyl substitution degree (DSpr) satisfy a relationship formula of 2.0 ≤ DSac + DSpr ≤ 3.0. The lower limit of DSac + DSpr is preferably 2.3 or more, more preferably 2.6 or more. The upper limit of DSac + DSpr is preferably 2.9 or less, more preferably 2.8 or less. The above-described cellulose series polymer may have other substituent groups other than acetyl group and propionyl group. Examples of the other substituent groups can include ester groups such as butyrate; ether groups such as alkyl ether group or alkylene ether group; or the like. The number-average molecular weight of the above-described cellulose series polymer is preferably from 5,000 to 100,000, more preferably from 10,000 to 70,000. By setting it to be within the above range, a good mechanical strength being excellent in productivity can be obtained.

Here, the protective film described above is bonded to the first polarizer 11 or the second polarizer 21 via an adhesive layer. As a material for forming this adhesive layer, a water-soluble adhesive agent containing a polyvinyl alcohol series resin is preferably used in the same manner as the adhesive agent used for bonding of the polarizers 11, 21 to the retardation layers 12, 22 described above. In particular, in the case where the protective film is a film made of a polymer (for example, an acryl series polymer or a norbornene series polymer) other than the cellulose series polymer such as triacetylcellulose, those in which the water-soluble adhesive agent containing a polyvinyl alcohol series resin contains a metal compound (alumina or the like) colloid are preferably used.

### <E. summary of liquid crystal display device>

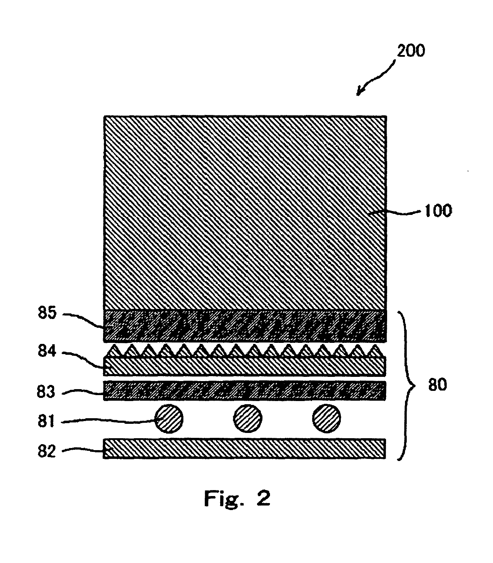

Fig. 2 is a longitudinal cross-sectional view schematically illustrating a construction of a liquid crystal display device according to one embodiment of the present invention. As shown in Fig. 2, a liquid crystal display device 200 includes at least a liquid crystal panel 100 described above with reference to Fig. 1 and a back light unit 80 disposed on one side of the liquid crystal panel 100. Here, in Fig. 2, a case adopting a directly-under type is shown as the back light unit; however, the light unit may be, for example, a side-light type.

In the case in which the directly-under type is adopted, the above-described back light unit 80 preferably includes at least a light source 81, a reflection film 82, a diffusing plate 83, a prism sheet 84, and a brightness improvement film 85. In the case in which the side-light type is adopted, the back light unit preferably further includes at least a light guiding plate and a light reflector in addition to the above construction. Here, in the liquid crystal display device 200 exemplified in Fig. 2, a part thereof may be omitted or a part thereof may be substituted with other members in accordance with the intended usage, such as the illumination system of the liquid crystal display device or a driving mode of the liquid crystal cell as long as the effects of the present invention are obtained.

The liquid crystal display device of the present invention may be a transmission type in which the screen is viewed by radiating light from the back surface of the liquid crystal panel, or may be a reflection type in which the screen is viewed by radiating light from the visible side of the liquid crystal panel. Alternatively, the liquid crystal display device of the present invention may be a semi-transmittance type having the properties of both the transmission type and the reflection type.

The liquid crystal panel and the liquid crystal display device of the present invention are used for any arbitrary suitable use. The usage of the liquid crystal panel and the liquid crystal display device of the present invention is, for example, for OA equipment such as a personal computer monitor, a notebook personal computer, or a copying machine, a portable apparatus such as a portable phone, a watch, a digital camera, a personal digital assistance (PDA), or a portable game machine, a home-use electric appliance such as a video camera a television or an electronic range, an apparatus for being mounted on a vehicle such as a back monitor, a monitor for a car navigation system, or a car audio apparatus, a display apparatus such as an information monitor for a commercial shop use, a supervision apparatus such as a monitor for supervision, a monitor for helping the handicapped persons, aiding and medical apparatus such as a monitor for medical use, or the like.

### [Examples]

Hereafter, the present invention will be further described in detail by showing Examples and Comparative Examples. However, the present invention is not limited to the following Examples.

### <A. measuring method of various parameters>

The measuring method of various parameters in the present Examples is as follows.
(1) measuring method of transmittance and polarization degree of polarizing plate:
   Measurement was made in a room of 23°C with use of a spectrophotometer (manufactured by Murakami Color Research Laboratory Institute Co., Ltd., trade name "DOT-3").

(2) measuring method of the content of each element (iodine, potassium, boron) of the polarizer:
The content of each element was determined on the basis of an X-ray intensity obtained by measuring a circular sample of a polarizer having a diameter of 10 mm by the fluorescence X-ray analysis method under the conditions of the following (a) to (i) and the calibration line prepared in advance with use of a standard sample.
   (a) analysis apparatus: fluorescence X-ray analysis apparatus (XRF) manufactured by Science Electric Machine Industry Co., Ltd. (trade name "ZSX100e")
   (b) anticathode: Rhodium
   (c) analysing crystal: lithium fluoride
   (d) excitation light energy: 40 kV - 90 mA
   (e) quantitating method: FP method
   (f) measuring time: 4 seconds

### (3) measuring method of nx, ny, nz, Re[590] and Rth[590]

Measurement was made at 23°C with use of a trade name "KOBRA21-ADH" manufactured by Ouji scientific Instruments Co., Ltd.. Here, for an average refractive index, a value measured by using an Abbe refractometer (manufactured by Atago Co., Ltd., trade name "DR-M4") was used.

### (4) measuring method of thickness

In the case in which the thickness was less than 10 µm, measurement was made with use of a spectrophotometer for thin film manufactured by Otsuka Electronics Co., Ltd.. (trade name "Instantaneous Multiple Light Measuring System MCPD-2000"). In the case in which the thickness was 10 µm or larger, measurement was made with use of a digital micrometer manufactured by Anritsu Co., Ltd. ("KC-351C type").

(5) measuring method of the contrast ratio of the liquid crystal display device

After 30 minutes had passed in a dark room at 23°C since the energization of back light, the black brightness (the Y value in the XYZ-display system when a black image was displayed), the white brightness (the Y value in the XYZ-display system when a white image was displayed), and the contrast ratio (white brightness / black brightness) in the front direction and in the oblique direction of the display screen were measured with use of a trade name: "EZ Contrast 160D" manufactured by ELDIM Corporation.

### <B. fabrication of a polarizer>

### [Reference Example]

A polymer film (trade name "VF-PS#7500" manufactured by Kuraray Co., Ltd.) having a thickness of 75 µm and containing a polyvinyl alcohol series resin as a major component was successively immersed into five baths under the following conditions (1) to (5) while imparting a tension in the longitudinal direction of the film, and was stretched so that the final stretching magnification (accumulated stretching magnification) would be 6.2 times as large as the original length of the film. The stretched film obtained by this was dried for one minute in an air-circulation type oven of 40°C, so as to fabricate a polarizer A.
(1) swelling bath: pure water of 30°C
(2) dyeing bath: an aqueous solution of 30°C containing 0.035 part by weight of iodine and 0.2 part by weight of potassium iodide relative to 100 parts by weight of water
(3) first cross-linking bath: an aqueous solution of 40°C containing 3 wt% of potassium iodide and 3 wt% of boric acid
(4) second cross-linking bath: an aqueous solution of 60°C containing 5 wt% of potassium iodide and 4 wt% of boric acid
(5) water-washing bath: an aqueous solution of 25°C containing 3 wt% of potassium iodide

### [Reference Example 2]

A polarizer B was fabricated under the same condition and by the same method as in the Reference Example 1 except that the amount of addition of iodine was changed to 0.032 part by weight relative to 100 parts by weight of water in the above (2) dyeing bath.

### [Reference Example 3]

A polarizer C was fabricated under the same condition and by the same method as in the Reference Example 1 except that the amount of addition of iodine was changed to 0.030 part by weight relative to 100 parts by weight of water in the above (2) dyeing bath.

### [Reference Example 4]

A polarizer D was fabricated under the same condition and by the same method as in the Reference Example 1 except that the amount of addition of iodine was changed to 0.028 part by weight relative to 100 parts by weight of water in the above (2) dyeing bath.

### [Reference Example 5]

A polarizer E was fabricated under the same condition and by the same method as in the Reference Example 1 except that the amount of addition of iodine was changed to 0.025 part by weight relative to 100 parts by weight of water in the above (2) dyeing bath.

### <C. fabrication of polarizing plate>

### [Reference Example 6]

A polymer film (trade name "ZRF80S" manufactured by Fuji Film Corporation, Re[590] = 0.1 nm, Rth[590] = 1 nm) containing a cellulose series resin and having a thickness of 80 µm was bonded as a protective film onto both surfaces of the polarizer A obtained in the Reference Example 1 via a water-soluble adhesive agent (trade name "Gohsefimer Z200" manufactured by Nippon Synthetic Chemicals Industry Co., Ltd.) containing a polyvinyl alcohol series resin as a major component, so as to fabricate a polarizing plate A1.

### [Reference Example 7]

A polarizing plate B1 was fabricated under the same condition and by the same method as in the Reference Example 6 except that the polarizer B obtained in the Reference Example 2 was used as a polarizer.

### [Reference Example 8]

A polarizing plate C1 was fabricated under the same condition and by the same method as in the Reference Example 6 except that the polarizer C obtained in the Reference Example 3 was used as a polarizer.

### [Reference Example 9]

A polarizing plate D1 was fabricated under the same condition and by the same method as in the Reference Example 6 except that the polarizer D obtained in the Reference Example 4 was used as a polarizer.

### [Reference Example 10]

A polarizing plate E1 was fabricated under the same condition and by the same method as in the Reference Example 6 except that the polarizer E obtained in the Reference Example 5 was used as a polarizer.

### [Reference Example 11]

A protective film was bonded under the same condition and by the same method as in the Reference Example 6 on one surface of the polarizer A obtained in the Reference Example 1. Next, a retardation layer whose refractive index ellipsoid satisfies a relationship of nx = nz > ny (corresponding to the second retardation layer of the present invention) bonded on the other surface of the polarizer A via an adhesive layer, so as to fabricate a polarizing plate A2. At this time, the retardation layer was bonded so that the slow axis direction of the retardation layer would be substantially parallel with the absorption axis direction of the polarizer A. The condition and method for fabricating the above-described retardation layer is specifically as follows. A pellet-formed resin of styrene-maleic anhydride copolymer (trade name "DYLARK D232" manufactured by NOVA Chemicals Japan Ltd.) was subjected to fusion extrusion with use of a T-die (flat die) having a temperature of 225°C, so as to obtain a film having a thickness of 100 µm. Subsequently, this film was subjected to free-end longitudinal stretching at a stretching temperature of 130°C and with a stretching magnification of 2 times, so as to obtain the above-described retardation layer (retardation film). Here, in the obtained retardation film, the thickness was 70 µm, the refractive index ellipsoid showed a relationship of nx = nz > ny, the Re[590] was 270 nm, and, the Rth[590] was 0 nm.

### [Reference Example 12]

A polarizing plate B2 was fabricated under the same condition and by the same method as in the Reference Example 11 except that the polarizer B obtained in the Reference Example 2 was used as a polarizer and that the stretching magnification of the retardation layer (a monoaxially stretched film of styrene-maleic anhydride copolymer) was changed to 1.6 times. Here, in the retardation layer (retardation film) constituting the polarizing plate B2, the thickness was 70 µm, the refractive index ellipsoid showed a relationship of nx = nz > ny, the Re[590] was 220 nm, and, the Rth[590] = 0 nm.

### [Reference Example 13]

A polarizing plate B3 was fabricated under the same condition and by the same method as in the Reference Example 11 except that the polarizer B obtained in the Reference Example 2 was used as a polarizer.

### [Reference Example 14]

A polarizing plate C2 was fabricated under the same condition and by the same method as in the Reference Example 11 except that the polarizer C obtained in the Reference Example 3 was used as a polarizer and that the stretching magnification of the retardation layer (a monoaxially stretched film of styrene-maleic anhydride copolymer) was changed to 1.5 times. Here, in the retardation layer (retardation film) constituting the polarizing plate C2, the thickness was 70 µm, the refractive index ellipsoid showed a relationship of nx = nz > ny, the Re[590] was 200 nm, and, the Rth[590] = 0 nm.

### [Reference Example 15]

A polarizing plate C3 was fabricated under the same condition and by the same method as in the Reference Example 14 except that the stretching magnification of the retardation layer (a monoaxially stretched film of styrene-maleic anhydride copolymer) was changed to the same magnification as in the Reference Example 12.

### [Reference Example 16]

A polarizing plate C4 was fabricated under the same condition and by the same method as in the Reference Example 14 except that the stretching magnification of the retardation layer (a monoaxially stretched film of styrene-maleic anhydride copolymer) was changed to the same magnification as in the Reference Example 11.

### [Reference Example 17]

A protective film was bonded under the same condition and by the same method as in the Reference Example 6 on both surfaces of the polarizer C obtained in the Reference Example 3. Next, a retardation layer whose refractive index ellipsoid satisfies a relationship of nz > nx = ny (corresponding to the first retardation layer of the present invention) was transcribed onto one protective film bonded to the polarizer C, so as to fabricate a polarizing plate C5. The condition and method for fabricating the above-described retardation layer is specifically as follows. A liquid crystal application solution was prepared by dissolving 20 parts by weight of a side-chain type liquid crystal polymer represented by the following chemical formula (III) (the numerals "65" and "35" in the formula (III) shows the mol% of the monomer unit, and is represented by a block polymer body for convenience's sake, weight-average molecular weight 5000), 80 parts by weight of a polymerizable liquid crystal (trade name "Paliocolor LC242" manufactured by BASF Co., Ltd.) exhibiting a nematic liquid crystal phase, 5 parts by weight of an optical polymerization initiator (trade name "Irgacure 907" manufactured by Ciba Specialty Chemicals Inc.) into 200 parts by weight of cyclopentanone. Then, the application solution was applied on a base material (a norbornene series resin film manufactured by Zeon Corporation, trade name "Zeonor") with use of a bar coater, followed by heating and drying at 80°C for 4 minutes to orient the liquid crystal. An ultraviolet ray was radiated onto this liquid crystal layer to harden the liquid crystal layer, thereby to form the above-described retardation layer on the base material. Then, this retardation layer was bonded onto one protective film with use of an isocyanate series adhesive agent (having a thickness of 5 µm), followed by removing the above-described base material (norbornene series resin film) to transcribe the above-described retardation layer onto the one protective layer. Here, in the above-described retardation layer, the thickness was 1.0 µm, the refractive index ellipsoid showed a relationship of nz > nx = ny, the Re[590] was 0 nm, and, the Rth[590] was -100 nm.

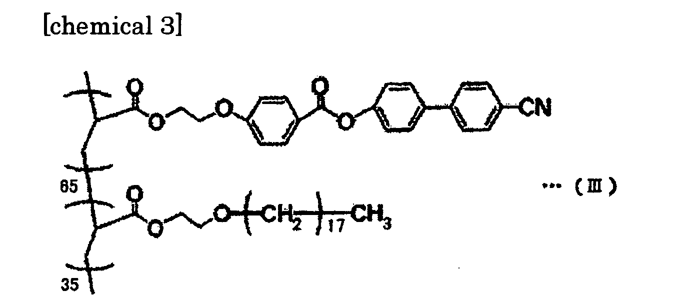

### [Reference Example 18]

A polarizing plate C6 was fabricated under the same condition and by the same method as in the Reference Example 17 except that the applied film thickness of the liquid crystal application solution was changed in fabricating the retardation layer. Here, in the retardation layer constituting the polarizing plate C6, the thickness was 0.4 µm, a refractive index ellipsoid showed a relationship of nz > nx = ny, the Re[590] was 0 nm and the Rth[590] was -40 nm.

### [Reference Example 19]

A polarizing plate D2 was fabricated under the same condition and by the same method as in the Reference Example 17 except that the polarizer D obtained in the Reference Example 4 was used as a polarizer.

### [Reference Example 20]

A polarizing plate E2 was fabricated under the same condition and by the same method as in the Reference Example 17 except that the polarizer E obtained in the Reference Example 5 was used as a polarizer.

### [the characteristics of the polarizing plate]

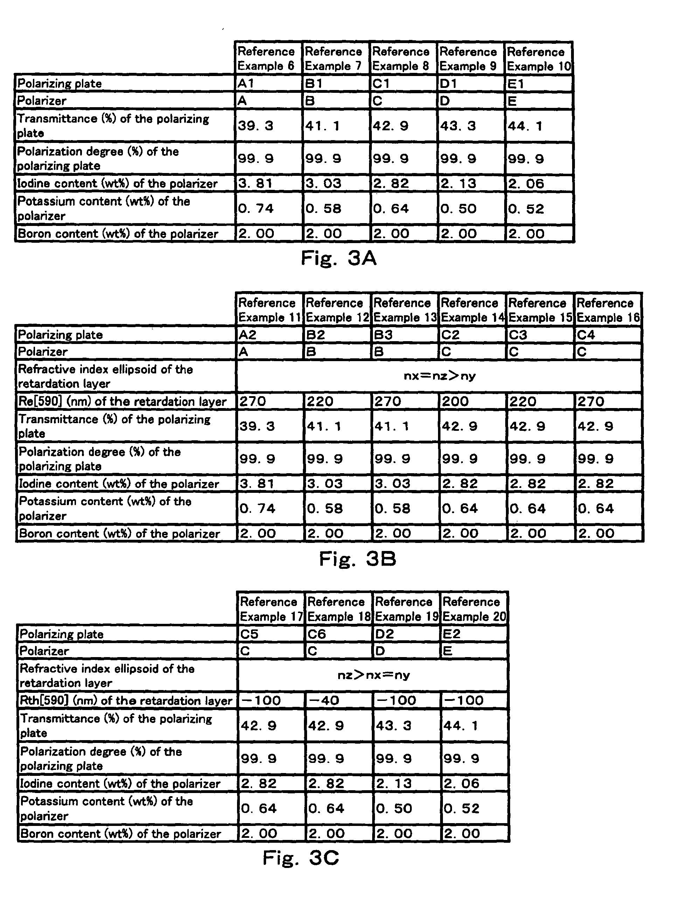

The characteristics of the polarizing plates of the Reference Examples 6 to 20 fabricated in the above-described manner are shown in Fig. 3. The polarizing plates of the Reference Examples 6 to 10 shown in Fig. 3A are polarizing plates that are not provided with a retardation layer (the first and the second retardation layers of the present invention). The polarizing plates of the Reference Examples 11 to 16 shown in Fig. 3B are polarizing plates that are provided with a retardation layer whose refractive index ellipsoid satisfies a relationship of nx = nz > ny (corresponding to the second retardation layer of the present invention). The polarizing plates of the Reference Examples 17 to 20 shown in Fig. 3C are polarizing plates that are provided with a retardation layer whose refractive index ellipsoid satisfies a relationship of nz > nx = ny (corresponding to the first retardation layer of the present invention).

### <D. preparation of liquid crystal cell>

### [Reference Example 21]

A liquid crystal panel was taken out from a commercially available liquid crystal display device including a liquid crystal cell of the IPS mode (32-inch liquid crystal television set manufactured by Hitachi Ltd., trade name "Wooo W32L-H9000"). The optical films such as the polarizing plates disposed above and below the liquid crystal cell were all removed from the inside of this liquid crystal panel, and the glass surfaces (front and back) of this liquid crystal cell were washed to obtain a liquid crystal cell X. The obtained liquid crystal cell X had Re[590] = 400 nm.

### [Reference Example 22]

A liquid crystal panel was taken out from a commercially available liquid crystal display device including a liquid crystal cell of the IPS mode (32-inch liquid crystal television set manufactured by Toshiba Corporation, trade name "REGZA 32C2000"). The optical films such as the polarizing plates disposed above and below the liquid crystal cell were all removed from the inside of this liquid crystal panel, and the glass surfaces (front and back) of this liquid crystal cell were washed to obtain a liquid crystal cell Y. The obtained liquid crystal cell Y had Re[590] = 350 nm.

### <E. fabrication of liquid crystal panel and liquid crystal display device>

### [Example 1]

The polarizing plate A2 fabricated in the Reference Example 11 was bonded as a first polarizing plate on the visible side of the liquid crystal cell X obtained in the Reference Example 21 via an acryl series pressure sensitive adhesive agent (thickness of 20 µm) while directing the retardation layer side of the polarizing plate A2 towards the liquid crystal cell X side. At this time, the polarizing plate A2 was bonded so that the absorption axis direction of the polarizing plate A2 will be substantially perpendicular to the slow axis direction (initial orientation direction) of the liquid crystal cell X. Subsequently, the polarizing plate D2 fabricated in the Reference Example 19 was bonded as a second polarizing plate on the side (back light side) opposite to the visible side of the liquid crystal cell X via an acryl series pressure sensitive agent (thickness of 20 µm) while directing the retardation layer side of the polarizing plate D2 towards the liquid crystal cell X side.
At this time, the polarizing plate D2 was bonded so that the absorption axis direction of the polarizing plate D2 will be substantially parallel with the slow axis direction (initial orientation direction) of the liquid crystal cell X. The liquid crystal panel fabricated in the above-described manner was coupled with the back light unit that the original liquid crystal display device was provided with, so as to fabricate a liquid crystal display device.

### [Example 2]

A liquid crystal display device was fabricated under the same condition and by the same method as in the Example 1 except that the liquid crystal cell Y obtained in the Reference Example 22 was used as a liquid crystal cell, and that the polarizing plate B2 fabricated in the Reference Example 12 was bonded on the visible side of the liquid crystal cell Y and the polarizing plate C5 fabricated in the Reference Example 17 was bonded on the back light side of the liquid crystal cell Y.

### [Example 3]

A liquid crystal display device was fabricated under the same condition and by the same method as in the Example 1 except that the polarizing plate B3 fabricated in the Reference Example 13 was bonded on the visible side of the liquid crystal cell X and the polarizing plate E2 fabricated in the Reference Example 20 was bonded on the back light side of the liquid crystal cell X.

### [Example 4]

A liquid crystal display device was fabricated under the same condition and by the same method as in the Example 1 except that the polarizing plate B3 fabricated in the Reference Example 13 was bonded on the visible side of the liquid crystal cell X and the polarizing plate D2 fabricated in the Reference Example 19 was bonded on the back light side of the liquid crystal cell X.

### [Example 5]

A liquid crystal display device was fabricated under the same condition and by the same method as in the Example 1 except that the polarizing plate C4 fabricated in the Reference Example 16 was bonded on the visible side of the liquid crystal cell X and the polarizing plate E2 fabricated in the Reference Example 20 was bonded on the back light side of the liquid crystal cell X.

### [Example 6]

A liquid crystal display device was fabricated under the same condition and by the same method as in the Example 1 except that the polarizing plate C4 fabricated in the Reference Example 16 was bonded on the visible side of the liquid crystal cell X and the polarizing plate D2 fabricated in the Reference Example 19 was bonded on the back light side of the liquid crystal cell X.

### [Comparative Example 1]

A liquid crystal display device was fabricated under the same condition and by the same method as in the Example 1 except that the polarizing plate B1 fabricated in the Reference Example 7 was bonded on both of the visible side and the back light side of the liquid crystal cell X.

### [Comparative Example 2]

A liquid crystal display device was fabricated under the same condition and by the same method as in the Example 1 except that the polarizing plate B1 fabricated in the Reference Example 7 was bonded on the visible side of the liquid crystal cell X and the polarizing plate A1 fabricated in the Reference Example 6 was bonded on the back light side of the liquid crystal cell X.

### [Comparative Example 3]

A liquid crystal display device was fabricated under the same condition and by the same method as in the Example 1 except that the polarizing plate C1 fabricated in the Reference Example 8 was bonded on both of the visible side and the back light side of the liquid crystal cell X.

### [Comparative Example 4]

A liquid crystal display device was fabricated under the same condition and by the same method as in the Example 1 except that the polarizing plate C1 fabricated in the Reference Example 8 was bonded on the visible side of the liquid crystal cell X and the polarizing plate B1 fabricated in the Reference Example 7 was bonded on the back light side of the liquid crystal cell X.

### [Comparative Example 5]

A liquid crystal display device was fabricated under the same condition and by the same method as in the Example 1 except that the polarizing plate D1 fabricated in the Reference Example 9 was bonded on the visible side of the liquid crystal cell X and the polarizing plate A1 fabricated in the Reference Example 6 was bonded on the back light side of the liquid crystal cell X.

### [Comparative Example 6]

A liquid crystal display device was fabricated under the same condition and by the same method as in the Example 1 except that the polarizing plate B1 fabricated in the Reference Example 7 was bonded on the visible side of the liquid crystal cell X and the polarizing plate E1 fabricated in the Reference Example 10 was bonded on the back light side of the liquid crystal cell X.

### [Comparative Example 7]

A liquid crystal display device was fabricated under the same condition and by the same method as in the Example 1 except that the polarizing plate B1 fabricated in the Reference Example 7 was bonded on the visible side of the liquid crystal cell X and the polarizing plate D1 fabricated in the Reference Example 9 was bonded on the back light side of the liquid crystal cell X.

### [Comparative Example 8]

A liquid crystal display device was fabricated under the same condition and by the same method as in the Example 1 except that the polarizing plate B1 fabricated in the Reference Example 7 was bonded on the visible side of the liquid crystal cell X and the polarizing plate C1 fabricated in the Reference Example 8 was bonded on the back light side of the liquid crystal cell X.

### [Comparative Example 9]

A liquid crystal display device was fabricated under the same condition and by the same method as in the Example 1 except that the polarizing plate C1 fabricated in the Reference Example 8 was bonded on the visible side of the liquid crystal cell X and the polarizing plate E1 fabricated in the Reference Example 10 was bonded on the back light side of the liquid crystal cell X.

### [Comparative Example 10]

A liquid crystal display device was fabricated under the same condition and by the same method as in the Example 1 except that the polarizing plate C1 fabricated in the Reference Example 8 was bonded on the visible side of the liquid crystal cell X and the polarizing plate D1 fabricated in the Reference Example 9 was bonded on the back light side of the liquid crystal cell X.

### [Comparative Example 11]

A liquid crystal display device was fabricated under the same condition and by the same method as in the Example 1 except that the polarizing plate A1 fabricated in the Reference Example 6 was bonded on the visible side of the liquid crystal cell X and the polarizing plate D1 fabricated in the Reference Example 9 was bonded on the back light side of the liquid crystal cell X.

### [Comparative Example 12]

A liquid crystal display device was fabricated under the same condition and by the same method as in the Example 1 except that the polarizing plate C4 fabricated in the Reference Example 16 was bonded on the visible side of the liquid crystal cell X and the polarizing plate C5 fabricated in the Reference Example 17 was bonded on the back light side of the liquid crystal cell X.

### [Comparative Example 13]

A liquid crystal display device was fabricated under the same condition and by the same method as in the Example 1 except that the polarizing plate C4 fabricated in the Reference Example 16 was bonded on the visible side of the liquid crystal cell X and the polarizing plate C6 fabricated in the Reference Example 18 was bonded on the back light side of the liquid crystal cell X.

### [Comparative Example 14]

A liquid crystal display device was fabricated under the same condition and by the same method as in the Example 1 except that the polarizing plate C2 fabricated in the Reference Example 14 was bonded on the visible side of the liquid crystal cell X and the polarizing plate C5 fabricated in the Reference Example 17 was bonded on the back light side of the liquid crystal cell X.

### [Comparative Example 15]

A liquid crystal display device was fabricated under the same condition and by the same method as in the Example 1 except that the liquid crystal cell Y obtained in the Reference Example 22 was used as a liquid crystal cell, and that the polarizing plate C3 fabricated in the Reference Example 15 was bonded on the visible side of the liquid crystal cell Y and the polarizing plate C5 fabricated in the Reference Example 17 was bonded on the back light side of the liquid crystal cell Y.

<F. evaluation of the contrast ratio of the liquid crystal display device>

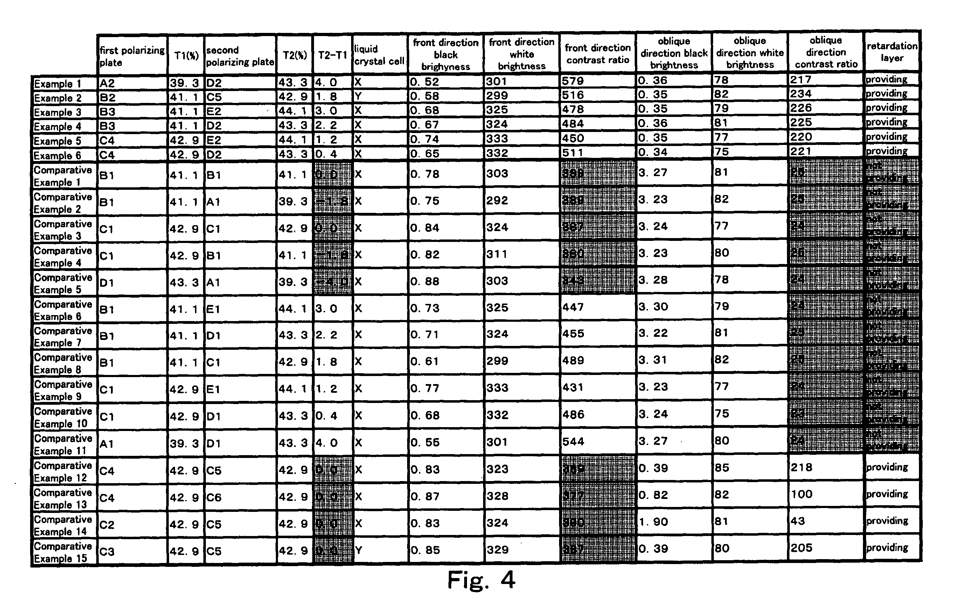

The contrast ratio of the liquid crystal display devices of the Examples 1 to 6 and the Comparative Examples 1 to 15 fabricated in the above-described manner was measured. The result thereof is shown in Fig. 4. Here, the numeral described in the column of T₁ in Fig. 4 represents the transmittance of the first polarizing plate bonded to the visible side of the liquid crystal cell, and the numeral described in the column of T₂ in Fig. 4 represents the transmittance of the second polarizing plate bonded to the back light side of the liquid crystal cell. Also, the numerals respectively described in the columns of the front direction black brightness, the front direction white brightness, the oblique direction black brightness, and the oblique direction white brightness of Fig. 4 are relative values. Further, the numerals described in the front direction contrast ratio and the oblique direction contrast ratio of Fig. 4 is a dimensionless amount.

As shown in Fig. 4, the liquid crystal display devices of the Examples 1 to 6 showed a high contrast ratio both in the front direction and in the oblique direction because the transmittance T₂ of the second polarizing plate is set to be larger than the transmittance T₁ of the first polarizing plate (in the examples shown in the Examples 1 to 6, the difference of transmittance (T₂ - T₁) is from 0.4 to 4.0%), and because of being provided with the first and second retardation layers. On the other hand, the liquid crystal display devices of the Comparative Examples 1 to 5 and 12 to 15 showed a decreased contrast ratio mainly in the front direction because the transmittance T₂ of the second polarizing plate is equal to the transmittance T₁ of the first polarizing plate, or the transmittance T₂ of the second polarizing plate is smaller than the transmittance T₁ of the first polarizing plate. Also, the liquid crystal display devices of the Comparative Examples 1 to 11 showed a decreased contrast ratio mainly in the oblique direction because of not being provided with the first and second retardation layers.

## Claims

1. A liquid crystal panel comprising:
a liquid crystal cell;
a first polarizing plate disposed on a visible side of the liquid crystal cell and including a first polarizer; and
a second polarizing plate disposed on a side opposite to the visible side of the liquid crystal cell and including a second polarizer, wherein
one polarizing plate of the first polarizing plate and the second polarizing plate is provided with a first retardation layer which is disposed between the liquid crystal cell and one polarizer of the first polarizer and the second polarizer, and whose refractive index ellipsoid satisfies a relationship of nz > nx = ny, and
a transmittance of the second polarizing plate is larger than a transmittance of the first polarizing plate.

2. The liquid crystal panel according to claim 1, wherein a difference between the transmittance of the second polarizing plate and the transmittance of the first polarizing plate is from 0.1 to 6.0%.

3. The liquid crystal panel according to claim 1, wherein the liquid crystal cell is a liquid crystal cell that is homogeneously oriented in a state in which no electric field is present.

4. The liquid crystal panel according to claim 1, wherein the transmittance of the first polarizing plate is 38.3 to 43.3%.

5. The liquid crystal panel according to claim 1, wherein the transmittance of the second polarizing plate is 41.1 to 44.3%.

6. The liquid crystal panel according to claim 1, wherein a polarization degree of the first polarizing plate and/or the second polarizing plate is 99% or more.

7. The liquid crystal panel according to claim 1, wherein the first polarizer and the second polarizer contain, as a major component, a polyvinyl alcohol series resin containing iodine.

8. The liquid crystal panel according to claim 7, wherein a difference between an iodine content of the first polarizer and an iodine content of the second polarizer is from 0.1 to 2.6 wt%.

9. The liquid crystal panel according to claim 7, wherein an iodine content of the first polarizer and the second polarizer is from 1.8 to 5.0 wt%.

10. The liquid crystal panel according to claim 1, wherein a retardation value Rth[590] in a thickness direction of the first retardation layer is from -150 to -40 nm.

11. The liquid crystal panel according to claim 1, wherein the other one polarizing plate of the first polarizing plate and the second polarizing plate is provided with a second retardation layer which is disposed between the liquid crystal cell and the other one polarizer of the first polarizer and the second polarizer, and whose refractive index ellipsoid satisfies a relationship of nx = nz > ny.

12. The liquid crystal panel according to claim 11, wherein a slow axis direction of the second retardation layer and an absorption axis direction of the polarizer included in the one polarizing plate of the first polarizing plate and the second polarizing plate that is provided with the first retardation layer are substantially perpendicular to each other.

13. The liquid crystal panel according to claim 11, wherein an in-plane retardation value Rye[590] of the second retardation layer is from 200 to 300 nm.

14. The liquid crystal panel according to claim 11, wherein the second retardation layer contains a styrene-maleic anhydride copolymer.

15. A liquid crystal display device provided with a liquid crystal panel according to claim 1.
